Europäisches Patentamt

European Patent Office

Office européen des brevets

(11) Publication number: **0 356 121**
**A2**

## (12) EUROPEAN PATENT APPLICATION

(21) Application number: **89308299.0**

(22) Date of filing: **16.08.89**

(51) Int. Cl.⁵: **G 07 F 7/02**

(30) Priority: **19.08.88 JP 207139/88**

(43) Date of publication of application:
**28.02.90 Bulletin 90/09**

(84) Designated Contracting States: **FR GB IT**

(71) Applicant: **KABUSHIKI KAISHA TOSHIBA**
**72, Horikawa-cho Saiwai-ku**
**Kawasaki-shi Kanagawa-ken 210 (JP)**

(72) Inventor: **Nakayama, Masayuki Intellectual Property**
**Division**
**Toshiba Corporation 1-1-1, Shibaura**
**Minato-ku Tokyo (JP)**

**Nakao, Ikuko Intellectual Property Division**
**Toshiba Corporation 1-1-1, Shibaura**
**Minato-ku Tokyo (JP)**

(74) Representative: **BATCHELLOR, KIRK & EYLES**
**2 Pear Tree Court Farringdon Road**
**London EC1R 0DS (GB)**

(54) Transaction system with prepaid card processing apparatus.

(57) A transaction system consists of an apparatus (11) for executing a transaction, such as a sale of goods, using a portable pre-paid transaction card (73) as a form of payment. The value of the card is stored in re-writable machine readable form on magnetic tape (117) and visibly printed on a display area (115). In order to reduce the cost of issuing replacement cards when nearly exhausted, the apparatus is provided with means to increase the current value of a card when less than a predetermined area of the display area has been used up and to re-issue the card.

EP 0 356 121 A2

Bundesdruckerei Berlin

**Description**

## TRANSACTION SYSTEM WITH PREPAID CARD PROCESSING APPARATUS

The present invention relates, to a transaction system. The transaction system includes a card processing apparatus which issues a portable transaction medium, e.g., card medium, in which a desired value or a prescribed value is stored.

A conventional card processing apparatus is disclosed in Japanese patent publication (Kokoku) 58-18672 filed by Tateishi Denki K.K. In this patent publication, data including an account No., a balance of deposit, etc., is recorded on a magnetic recording medium, e.g., a magnetic tape, adhered on one surface of a card medium. The balance of deposit is renewed and is recorded on a portion of the magnetic recording medium on which a previous balance of deposit has been recorded. A number of printing rows are provided on the other surface of the card medium. The balance of deposit is visibly printed on a printing row of the card medium. Renewed balance of deposit also is printed next to the previous data.

In such a conventional apparatus, since renewed data is overwritten on the previous data of the magnetic recording medium, renewed data can be recorded repeatedly. A new card medium, is issued if the balance of deposit (i.e. the remaining or current value of the card) is small even when there are unused printing rows. To issue a new card medium the balance of deposit of the old card medium (current card medium) is recorded on the magnetic recording medium arranged on the new card medium. Thus, a user can replace a current card with a new card medium. However, it is undesirable to unnecessarily issue a new card medium because of the high cost of the card medium.

It is an object of the present invention to prolong the useful life of a portable transaction medium.

It is another object of the invention to reissue a previously issued transaction medium with increased value thereon.

According to the present invention there is provided a transaction system comprising a transaction apparatus having means for receiving a previously issued portable transaction medium capable of use as a form of payment and capable of issuing a new, replacement, transaction medium; each said transaction medium having a machine readable memory area for storing an initial monetary value and a current monetary value and a visible data area for successively displaying the current value; and characterised by, input means for inputting an input monetary value, read/write means for reading the current value from the memory area of the previously issued transaction medium and capable of either; storing an increased current value corresponding to the sum of the current value and the input monetary value in the memory area of the previously issued transaction medium or, storing the increased current value in the memory area of the new transaction medium; and said means then selectively discharging the transaction medium having the increased current value. remaining value of the used transaction medium to reissue the used transaction medium. The transaction system may include an adding section for adding a prescribed premium to the current remaining value of the used transaction medium when the latest remaining value of the used transaction medium is determined if the used transaction medium reissuing operation mode is selected.

A transaction system according to the present invention will now be described, with reference to the accompanying drawings; in which,

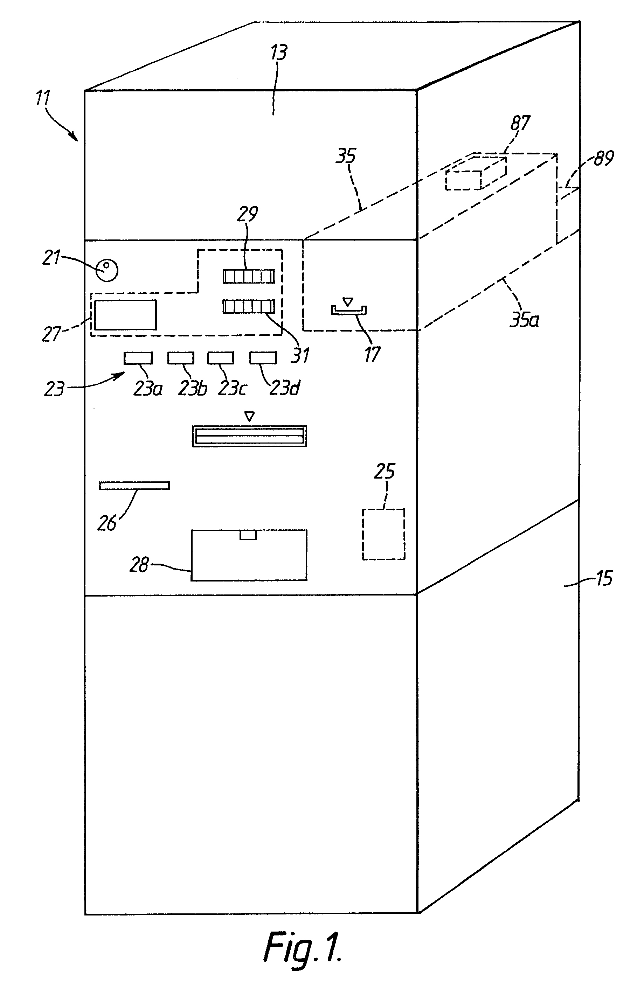

FIGURE 1 is a perspective view illustrating a transaction apparatus of one embodiment of the present invention;

FIGURE 2 is a schematic sectional view illustrating a card processing apparatus of the transaction apparatus shown in FIGURE 1;

FIGURE 3 is a block diagram of the transaction apparatus shown in FIGURE 1;

FIGURE 4 is a front view illustrating an arrangement of the key input section of the transaction apparatus shown in FIGURE 1;

FIGURE 5a is a plan view illustrating one example of a card type medium used in the transaction appratus shown in FIGURE 1;

FIGURE 5b is a plan view illustrating an arrangement of data area on the magnetic recording medium of the card medium shown in FIGURE 5b;

FIGURE 6a is a plan view illustrating first processing result of the card medium by the transaction apparatus shown in FIGURE 1;

FIGURE 6b is a plan view illustrating second processing result of the card medium by the transaction apparatus shown in FIGURE 1;

FIGURE 6c is a plan view illustrating third processing result of the card medium by the transaction apparatus shown in FIGURE 1;

FIGURE 6d is a plan view illustrating fourth processing result of the card medium by the transaction apparatus shown in FIGURE 1; and

FIGURES 7a and 7b are a flowchart illustrating card processing operations of the transaction apparatus shown in FIGURE 1.

Preferred embodiment of the present invention will now be described. A transaction apparatus 11 includes an operation panel 13 arranged on the front surface of body 13. A card handling port 17 is formed at a right hand side of the upper portion of panel 13 to take a card medium (transaction medium) into or to discharge the card medium from body 15 therethrough. A banknote insertion port 19 is formed at the middle portion of panel 13 to receive banknotes therethrough. A cancel command input section 21 is provided at a left hand side of the upper portion of panel 13 to cancel a current transaction. A value input section 23 is arranged at a portion of panel 13 above banknote insertion port 19. Value input section 23 includes a plurality of value buttons 23a, 23b, 23c and 23d on which different monetary values, e.g., 10$, 30$, 50$, etc., are designated. A key input section 25 composed of a ten key is arranged at a right hand side of the lower portion of panel 13. A receipt discharge port 26 is formed at a left hand side of the middle portion of panel 13. A change discharge port 28 is formed at the bottom portion of panel 13. A display section 27 is also arranged on panel 13. Display section 27 includes a received value display unit 29, a card remaining value display unit 31 and an information display unit 33. Received value display unit 29 includes a plurality of indicator tubes, e.g., discharge indicator tubes, to indicate value of banknotes received by transaction apparatus 11 through banknote insertion port 19. Card remaining value display unit 31 also includes a plurality of indicator tubes to indicate remaining value of the card medium which is inserted into transaction apparatus 11 through card handling port 17. Information display unit 33 is provided with a panel on which information, e.g., "sale suspended" and "small change exhausted" are displayed.

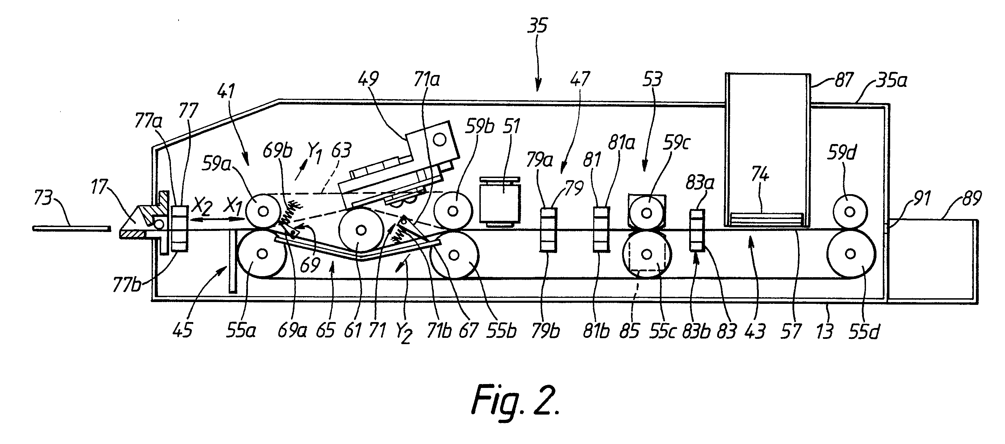

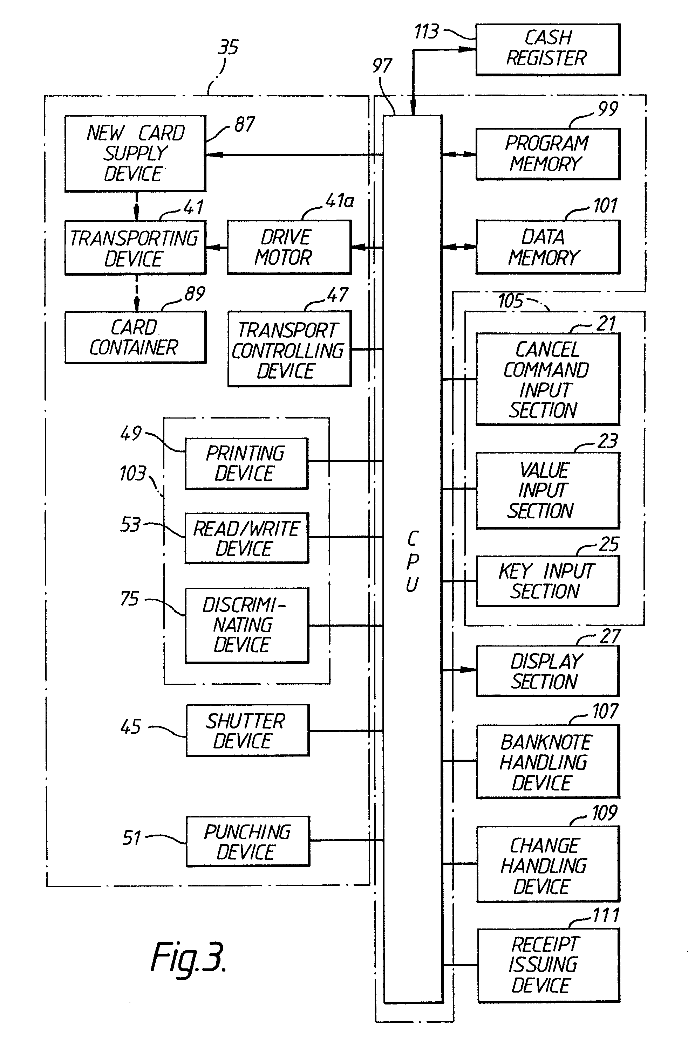

Transaction apparatus 11 is provided with a card processing apparatus 35. The construction of card processing apparatus 35 will be described with reference to FIGURES 2 and 3. A transporting device 41 extends from card handling port 17 toward the inner-most portion of card processing apparatus 35 to form a card conveying pass 43. A shutter device 45, a transport controlling device 47 and a printing device 49 are successively arranged along card conveying pass 43. A punching device 51 and a read/write device 53 also are arranged along card conveying pass 43.

Transporting device 41 includes a first conveying roller 55a, a second conveying roller 55b, a third conveying roller 55c, and a fourth conveying roller 55d. First, second, third and fourth conveying rollers 55a, 55b, 55c and 55d are successively arranged along card conveying pass 43. A conveying belt 57 is stretched between first conveying roller 55a and fourth conveying roller 55d. Second and third conveying rollers 55b and 55c respectively contact conveying belt 57 at their outer surface. First, second, third and fourth guide rollers 59a, 59b, 59c and 59d are arranged along card conveying pass 43 such that each guide roller 59a, 59b, 59c, 59d rotatably engages with the corresponding conveying rollers 55a, 55b, 55c, and 55d through conveying belt 57, as shown in FIGURE 2. A diverging conveyer roller 61 is disposed between first and second conveying rollers 55a and 55b. An auxiliary conveying belt 63 extends between first and second guide rollers 59a and 59b. The peripheral surface of diverging conveyer roller 61 contacts each outer surface of conveying belt 57 and auxiliary conveying belt 63. Thus, a diverging conveyer path 65 is established between first and second conveying rollers 55a and 55b. A guide plate 67 is arranged along diverging convey pass 65.

First and second diverging mechanisms 69 and 71 are disposed at diverging convey pass 65. First diverging mechanism 69 includes a first movable lever 69a disposed close to first conveying roller 55a. One of the end portions of a first movable lever 69a close to guide plate 67 is fixed, as a fulcrum, and the other end portion thereof faces on auxiliary conveying belt 63. First diverging mechanism 69 also includes a first tensile spring 69b to urge the other end portion of first movable lever 69a with a small tensile force in a direction indicated by an arrow Y1 shown in FIGURE 2. Thus, the other end portion of first movable lever 69a is normaly oriented toward auxiliary conveying belt 63. Second diverging mechanism 71 includes a second movable lever 71a. One of the end portions of second movable lever 71a close to auxiliary conveying belt 63 is fixed, and the other end portion thereof faces on conveying belt 57. Second diverging mechanism 71 also includes a second tensile spring 71b to pull the other end portion of second movable lever 71a with a small tensile force in a direction indicated by an arrow Y2.

Shutter device 45 is disposed between first conveying reciprocally moves across card conveying pass 43 to interrupt a card medium 73 in response to a discriminating device 75 shown in FIGURE 3.

Transport controlling device 47 includes first, second, third and fourth sensor units 77, 79, 81 and 83, each of which is composed of a light emitting element 77a, 79a, 81a and 83a and a photodetecting element 77b, 79b, 81b and 83b to detect the presence of card type medium 73. First sensor unit 77 is disposed between card handling port 17 and shutter device 45. Light emitting element 77a and photodetecting element 77b of first sensor unit 77 are disposed at the opposite sides of card conveying pass 43. Second sensor unit 79 is disposed between punching device 51 and third conveying roller 55c. Light emitting element 79a and photodetecting element 79b of second sensor unit 79 are arranged similar to that of first sensor unit 77. Third sensor unit 81 is disposed between second sensor unit 79 and third conveying roller 55c. Light emitting element 81a and photodetecting element 81b of third sensor unit 81 are also arranged similar to that of first sensor unit 77. Fourth sensor unit 83 is disposed between third conveying roller 55c and fourth conveying roller 55d. Light emitting element 83a and photodetecting element 83b of fourth sensor unit 83 is arranged similar to that of first sensor unit 77. Thus, the location of card medium 73 is sequentially detected by first, second, third and fourth sensor units 77, 79, 81 and 83, and each sensor unit outputs a detection signal when the presence of card medium 73 is detected.

Printing device 49 includes a printer, e.g., thermal printer, of which the printing head faces to the outer peripheral surface of diverging convey roller 61.

Punching device 51 is disposed opposite to card conveying pass 43 between second conveying roller 55b and second sensor unit 79 to punch card type medium 73 conveyed by conveying belt 57 when an invalidating operation is carried out.

Read/write device 53 is arranged at a position where third conveying roller 55c and third guide roller 59c are disposed. Read/write device 53 includes first and second magnetic transducers 83 and 85, i.e., magnetic heads. The head surface of the first magnetic transducer 83 is downwardly directed to face the card conveying passage 43. The head surface of the second magnetic transducer 85 is upwardly directed to face the head surface of the first magnetic transducer 83, and to be speced therefrom. portion of conveying belt 57 between fourth sensor unit 83 and fourth guide roller 59d. A plurality of new cards 74 are stacked in new card supply device 87 and are supplied one by one onto conveying belt 57 to issue a new card 74.

A card container 89 is arranged at the backside of card processing apparatus 35 to temporarily store invalidated cards discharged from the card processing apparatus 35 through a discharge opening 91 formed in the backside wall of a casing 35a of card processing apparatus 35.

A control system of the above-described transaction apparatus will now be described with reference to FIGURE 3. A card medium issuing control unit 95 includes a CPU 97 for controlling each unit or device of the apparatus, a program memory 99 for storing an operating program of the apparatus, and a data memory 101 for storing operating information, e.g., value data, denomination data and number of times used data each read out from card medium 73 by read/write device 53. Data memory 101 also stores data which is needed in the apparatus, e.g., new card issuing fee data, etc. New card supply device 87 is connected to CPU 97 of card medium issuing control unit 95. A drive motor 41a is connected to CPU 97 to drive transporting device 41 in accordance with a command signal fed from CPU 97. Transport controlling device 47 including first, second, third and fourth sensor units 77, 79, 81 and 83 is connected to CPU 97. A transaction data processing unit 103 includes printing device 49, read/write device 53 and discriminating device 75 each connected to CPU 97. Shutter device 45 and punching device 51 are respectively connected to CPU 97. An input device 105 includes cancel command input section 21, value input section 23 and key input section 25 each connected to CPU 97. Display section 27 is connected to CPU 97. A banknote handling device 107 is also connected to CPU 97. Banknote handling device 107 is positioned inside banknote insertion port 19 to detect values of banknotes taken from banknote insertion port 19. Banknote handling device 107 returns banknotes through banknote insertion port 19 in response to CPU 97. A change handling device 109 is connected to CPU 97. Change handling device 109 stores changes and calculates changes in response to CPU 97 to discharge changes to change discharge port 28. A receipt issuing device 111 is connected to CPU 97 to issue a receipt through receipt discharge port 26. A cash register 113 is connected to CPU 97 is it is used.

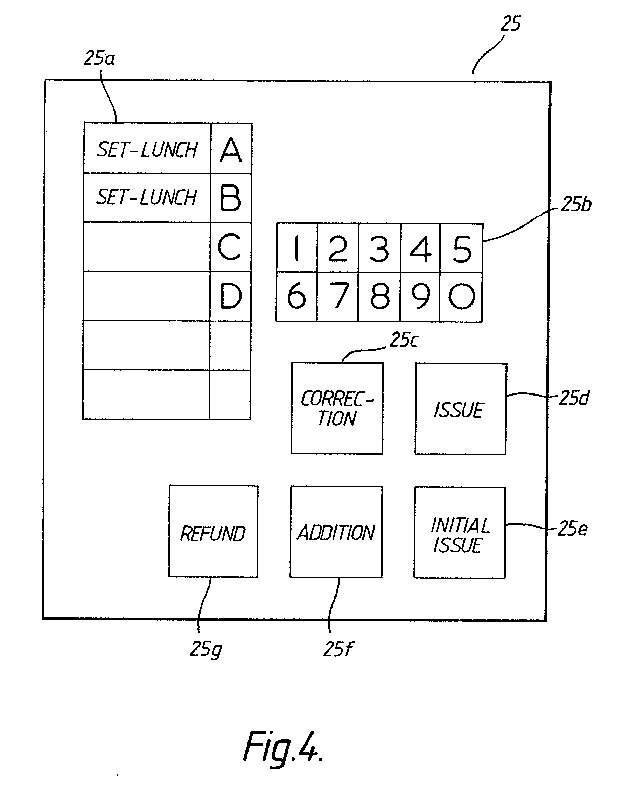

FIGURE 4 shows one example of key input section 25. Key input section 25 includes an item key 25a for inputting item data, such as, e.g., set lunch "A", set lunch "B", which indicate varieties of lunch, and a ten key 25b for inputting numerical data. Key input section 25 also includes a correction key 25c for inputting a correction command into CPU 97, an issue key 25d for inputting an issue command into CPU 97, an initial issue key 25e for inputting an initial issue command into CPU 97, an addition key 25f for inputting an addition command into CPU 97, and a refund key 25g for inputting a refund command into CPU 97.

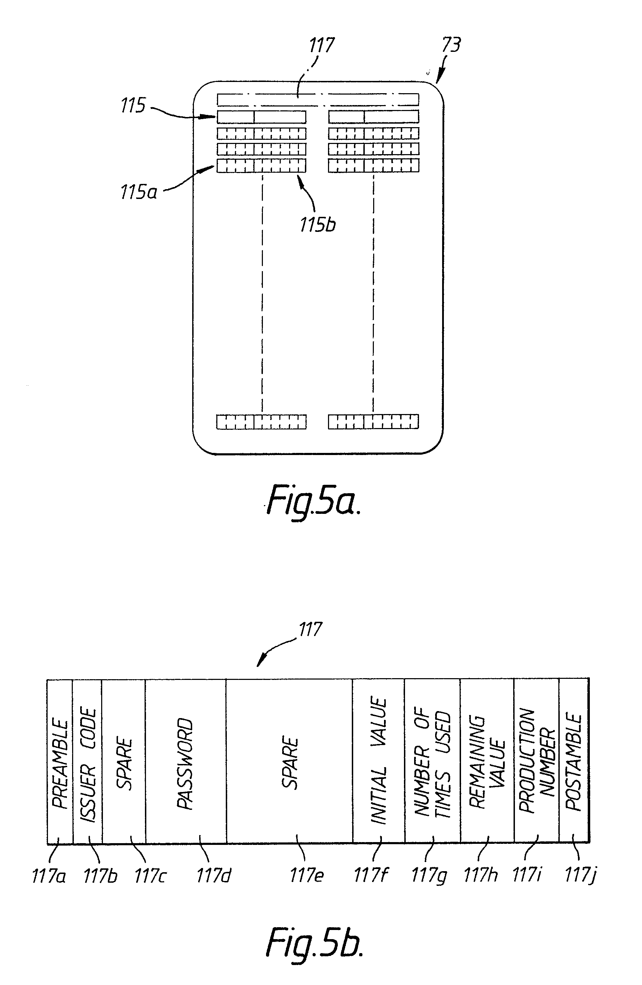

A constitution of card medium will be described with reference to FIGURES 5a and 5b. A plurality of visible data rows 115 each including a date of use column 115a and a remaining value display column 115b are printed on the front surface of card medium 73a. A magnetic tape 117 is provided on the rear surface of card medium 73a. As shown in FIGURE 5b, the record area of magnetic tape 117 is divided into serial data areas including a preamble data area 117a, an issuer code data area 117b, a spare data area 117c, a password data area 117d and a spare data area 117e. The serial data areas also include an initial value data area 117f, a number of times used data area 117g, a remaining value data area 117h, a production number data area 117i and a postamble data area 117j.

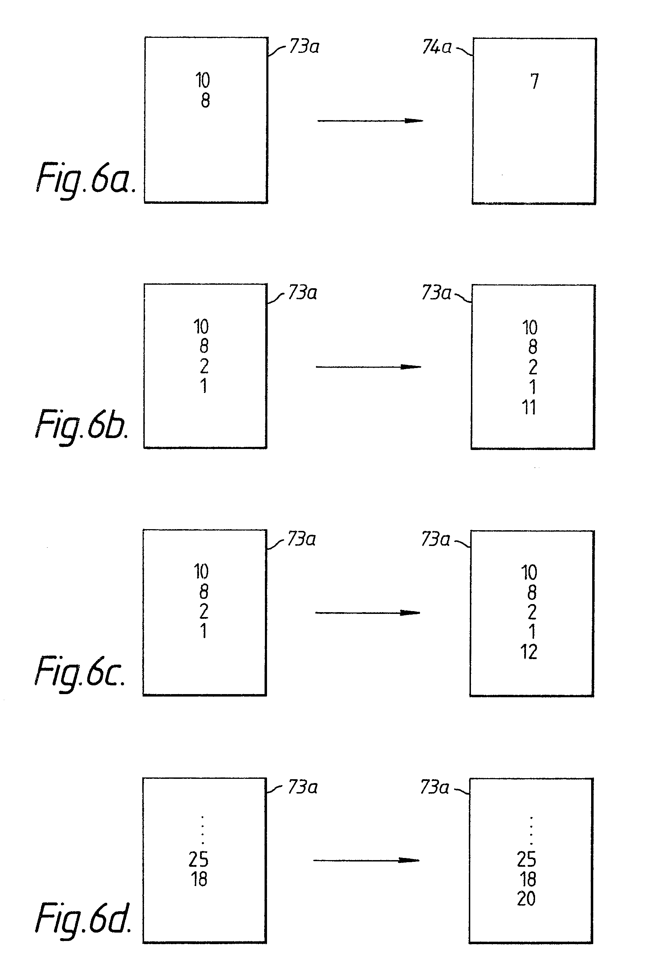

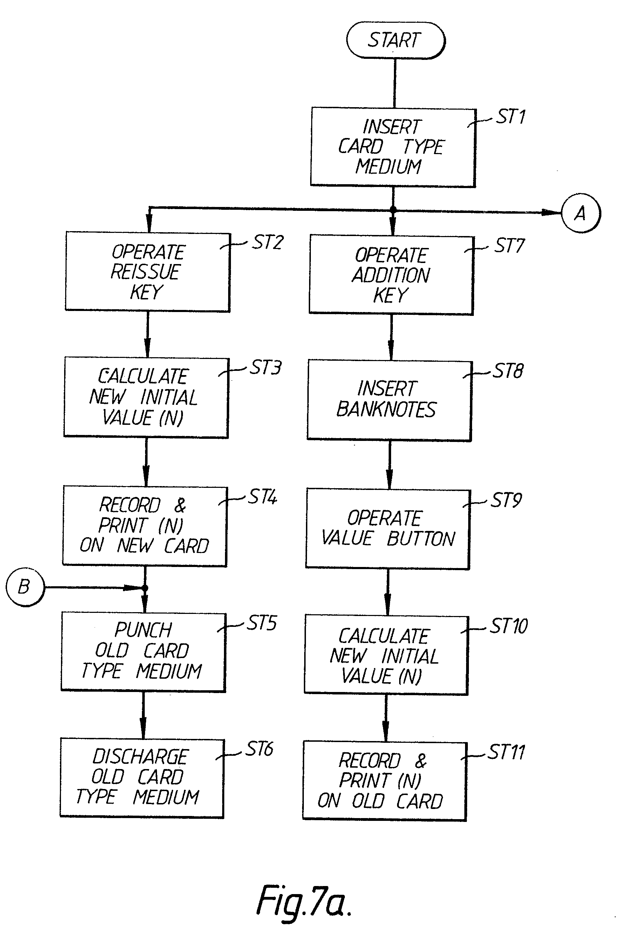

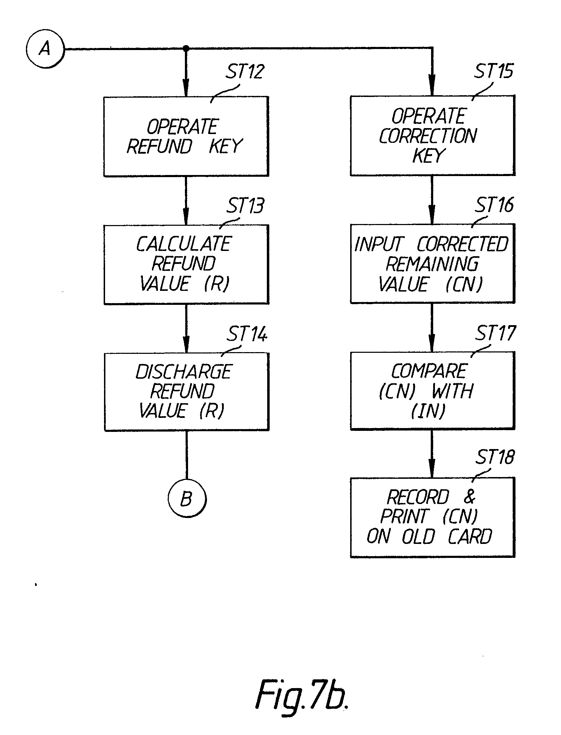

Operations of the above-described transaction apparatus will now be described with reference to FIGURES 6a, 6b, 6c, 6d, 7a and 7b. In FIGURES 6a, 6b, 6c, and 6d, only printed remaining values are shown for the purpose of the simplicity. Firstly, a new card issuing operation will be described. When a current card medium 73a shown in FIGURE 6a is inserted into card processing apparatus 35 through card handling port 17 as a previously issued card (ST1 in FIGURE 7a), card medium 73a is conveyed to read/write device 53 along card conveying pass 43 by transporting device 41, and the serial data recorded on magnetic tape 117 fixed on the rear side of card medium 73a is read out. Then, the remaining value data of the serial data is transmitted to discriminating device 75 and is discriminated, as eight dollars. At this time, if a user operates issue key 25d of key input section 25 to select a new card issuing operation (ST2 in FIGURE 7a), CPU 97 of card medium issuing control unit 95 calculates a new initial value (N) of a new card medium 74a on the basis of the discriminating result of discriminating device 75 and the new card issuing fee data, e.g., one dollar, read out from data memory 101 (ST3). The new initial value (N) is determined by subtracting the new card issuing fee (one dollar) from the remaining value of current card 73a (eight dollars). Thus, the new initial value (N) is seven dollars. Simultaneously, CPU 97 controls new card supply device 87 to supply new card medium 74 to card conveying pass 43. Furthermore, CPU 97 controls drive motor 41a to convey new card medium 74a toward read/write device 53 by transporting device 41. Read/write device 53 records the initial value (N) in initial value data area 117f of magnetic tape 117 of new card medium 74a. The initial value (N) is also recorded on remaining value data area 117h. New card medium 74a is further conveyed to printing device 49, and the initial value (N) is printed as a remaining value on remaining value display column 115b of visible data row 115 of new card medium 74a by printing device 49, as shown in FIGURE 6a (ST4). Then, new card medium 74a is conveyed toward card handling port 17, and the top portion of new card medium 74a projects from card handling port 17 of card processing apparatus 35 to be issued from card processing apparatus 35, as a current card medium. The current card medium 73a (previously issued card medium) is moved to the position below punching device 51 by transporting device 41 prior to the operation of new card supply device 87. A portion of magnetic tape 117 of current card medium 73a is punched by punching device 51 to invalidate current card medium 73a (ST5). Then, the invalid card medium 73a is discharged to card container 89 through discharge opening 91 (ST6).

A card medium reissuing operation will now be described. In this operation, value is added to current card type medium 73a. When the current card medium 73a shown in FIGURE 6b is inserted into card handling port 17 as a previously issued card medium (ST1 in FIGURE 7a), current card medium 73a is conveyed to read/write device 53 by transporting device 41 to read out the serial data recorded on magnetic tape 117. The remaining value data recorded on remaining value data area 117h of magnetic tape 117 is transmitted to discriminating device 75 and is discriminated, as one dollar. At this time, if a user operates addition key 25f of key input section 25, the card medium reissuing operation is selected (ST7). When the user inserts, e.g., a ten dollar banknote into transaction apparatus 11 through banknote insertion port 19 and inputs monetary value data indicating ten dollars into CPU 97 through one of the value buttons 23a of value input section 23 (ST8 and ST9), CPU 97 calculates a new initial value (N) in accordance with the result of discriminating device 75 and the value data input by the user. The new initial value (N) is determined by adding the remaining value, i.e., one dollar, and the value data, i.e., ten dollars (ST10). The new initial value (N), i.e., eleven dollars, is transmitted to read/write device 53 to record the new initial value (N) on initial value data area 117f of magnetic tape 117 of current card medium 73a. At this time, the remaining value also is renewed. current card medium 73a is conveyed to printing device 49. The new initial value (N) is printed on the remaining value display column 115b of visible data row 115, as a remaining value, next to the previously printed remaining value display row (ST11), as shown in FIGURE 6b. After the above-described printing process, current card medium 73a is conveyed toward card handling port 17, and the top portion of current card medium 73a projects from card handling port 17 of card processing apparatus 35 to be reissued by card processing apparatus 35, as a usable card.

With the above-described card medium reissuing operation, since the current card medium 73a is used as long as a usable area of visible data rows 115 of current card medium 73a remains even if the remaining value of current card medium 73a is zero. Thus, the user does not need to pay a new card issuing fee, i.e., one dollar. Furthermore, since useful life of the current card medium extends, the card issuing cost can be reduced.

In the above-described card medium reissuing operation, a prescribed premium may be added to the initial value (N) when the initial value (N) is calculated, as shown in FIGURE 6c (ST10). If the remaining value of the current card medium 73a is zero, the user is motivated to select the card medium reissuing operation, rather than the new card issuing operation as long as a usable area of visible data rows 115 of current card medium 73a remains when the user requests issuance of a usable card medium. The value of the premium may be determined by adding a fixed value, e.g., one dollar, to the adding value. A predetermined rate corresponding to the adding value may be used to determine the value of the premium, instead of the fixed value.

A refund operation will now be described. When a current card medium, not shown, of which the remaining value is, e.g., two dollars, is inserted into card processing apparatus 35, the remaining value is discriminated as two dollars by te execution of the above-described transporting and discriminating processes. If the user operates refund key 25g of key input section 25 to select the refund operation (ST12 of FIGURE 7b), CPU 97 calculates a refund value (R) based on the remaining value and the refund fee data, e.g., one dollar, read out from data memory 101 (ST13). The refund value (R) is determined, as one dollar, by subtracting the refund fee, i.e., one dollar, from the remaining value, i.e., two dollars. CPU 97 sends the refund value (R) data to change handling device 109. Thus, one dollar is discharged to change discharge port 28 by change handling device 109 (ST14). After that, a portion of magnetic tape 117 of the current card medium is punched by punching device 51 (ST5), and then the invalid card medium is discharged to card container 89 through discharge opening (ST6).

A correcting operation will now be described. A user intends to buy the set lunch A (five dollars). However, if the user operates an incorrect item key, e.g., set lunch B (seven dollars), transaction apparatus 11 carries out a prescribed operation. The remaining value, e.g., an eighteen dollar, is printed on remaining value display column 115b of the current card medium 73a, as shown in FIGURE 6d. In this case, an operator reinserts current card medium 73a into card handling port 17 in response to the user's request (ST1 in FIGURE 7a). Then, the operator operates correction key 25c of key input section 25 to select the correcting operation (ST15 in FIGURE 7b)). The remaining value (N) is discriminated by the above-described discriminating operation and is displayed on card remaining value display unit 33. The operator inputs a corrected remaining value (CN), i.e., twenty, by ten key 25b of key input section 25 in accordance with the difference between each value of set lunches A and B and the remaining value displayed on card remaining value display unit 33 (ST16). The corrected remaining value (CN) is compared with the initial value (IN) read out from initial value data area 117f of magnetic tape 117 of the current card medium 73a whether or not the corrected remaining value (CN) exceeds the initial value (IN) (ST17). Then, CPU 97 sends the corrected remaining value (CN) to read/write device 53, and the remaining value data stored in remaining value data area 117h of magnetic tape 117 is rewritten to the corrected remaining value (CN). The current card medium 73a is conveyed to printing device 49, and the corrected remaining value (CN) is printed on the remaining value display column next to the remaining value display column where the previous remaining value is printed by the above-described misoperation (ST 18), as shown in FIGURE 6b. Finary, the corrected current card medium 73a is conveyed toward card handling port 17 to be returned to the user.

It should be noted that an initial issuance of a new card medium is carried out when the user operates initial issue key 15e of key input section 25, and inserts a desired value of banknotes into banknote insertion port 19. The user also inputs the value of the banknotes into CPU 97 through ten-key 25b. A new card medium is issued from card processing apparatus 35 by a usual manner.

With the above-described embodiment, since the current card medium is reissued by adding an additional value, the card issuing cost reduces. A prescribed premium may be added to the remaining value of the current card medium when the card medium reissuing operation is selected. Thus, as long as a usable area of the visible data rows of the current card medium remains, the user is motivated to select the card medium reissuing operation in which a desired value is added to the remaining value of the current card medium and the current card medium is reissued, rather than the new card issuing operation in which either an increased value or the remaining value of the current card medium is recorded on the initial value data area and the remaining value data area of the magnetic tape of a new card medium and the new card medium is issued. Since the new card issuing fee is automatically collected when a new card medium is issued, the operating efficiency of the card processing apparatus in the system management is practically enhanced.

## Claims

1. A transaction system comprising a transaction apparatus (11) having means (35) for receiving a previously issued portable transaction medium (73) capable of use as a form of payment and capable of issuing a new, replacement, transaction medium (73); each said transaction medium (73) having a machine readable memory area (117) for storing an initial monetary value and a current monetary value and a visible data area for successively displaying the current value; and characterised by, input means (105) for inputting an input monetary value, read/write means (53) for reading the current value from the memory area (117) of the previously issued transaction medium and capable of either; storing an increased current value corresponding to the sum of the current value and the input monetary value in the memory area of the previously issued transaction medium or, storing the increased current value in the memory area of the new transaction medium; and said means (35) then selectively discharging the transaction medium having the increased current value.

2. A system according to claim 1 further including mode selection means for selecting an adding operation mode wherein the previously issued transaction medium including the increased current remaining value stored and displayed thereon is reissued when the used region of the visible data area does not exceed a predetermined area.

3. A system according to claim 2, wherein the mode selection means further includes transaction medium issuing mode means for selecting a new transaction medium issuing operation mode wherein the new transaction medium including the current remaining value stored and displayed thereon is issued.

4. A system according to claim 2 further including means for adding a prescribed premium to the increased current remaining value of the previously issued transaction medium when the addition mode is selected.

5. A system according to claim 2, wherein the visible data area of the previously issued transaction medium has a plurality of printing rows, and the system further includes means for printing the increased current remaining value in the next available row on the visible data area of the previously issued transaction medium.

6. A system according to claim 3 further including memory means for storing data representing a new transaction medium issue fee, the transaction medium issuing mode means includes means for subtracting the new transaction medium issue fee from the current remaining value of the previously issued transaction medium.

7. A system according to claim 6 further including means for invalidating the previously issued transaction medium.

8. A system according to claim 7, wherein the invalidating means includes means for punching a portion of the memory area of the previously issued transaction medium.

9. A system according to claim 3, wherein the visible data area of the new transaction medium has a plurality of printing rows, and the system further includes means for printing the current remaining value in the next available row on the visible data area of the new transaction medium.

10. A system according to claim 2, wherein the mode selection means includes correction mode means for selecting a correcting operation mode wherein the current remaining value of the previously issued transaction medium is corrected on the basis of the input monetary value from the input means, and the corrected current remaining value is stored in the memory area of the previously issued transaction medium.

11. A system according to claim 10, wherein the visible data area of the previously issued transaction medium has a plurality of printing rows, and the system further includes means for printing the corrected remaining value in the next available row of the visible data area of the previously issued transaction medium.

12. A system according to claim 1 further including memory means for storing data representing a refund fee, and the mode selecting means including refund mode means for selecting a refund operation mode wherein the refund fee is subtracted from the current remaining value of the previously issued transaction medium for determining a refund value, and a prescribed value of cash is discharged according to the refund value.

13. A system according to claim 12 further including means for invalidating the previously issued transaction medium.

14. A system according to claim 13, wherein the invalidating means includes means for punching a portion of the memory area of the previously issued transaction medium.

15. A transaction system for receiving a previously issued portable transaction medium as a form of payment, and issuing a new transaction medium, each transaction medium having a memory area for storing one of an initial value corresponding to the initial monetary value of the transaction medium and a current remaining value corresponding to the current monetary value of the transaction medium, and a visible data area of limited size for displaying succesively a modified current remaining value corresponding to the monetary value of the transaction medium after each transaction, the system comprising:

means for receiving a previously issued transaction medium;

input means for inputting an input monetary value, the input means including a reissuing operation selection key;

transaction information processing means for reading out the current remaining value from the memory area of the previously issued transaction medium;

transaction medium issuing control means responsive to the reissuing operation selection key for determining an increased current remaining value corresponding to the sum of the current remaining value and the input monetary value for reissuing the previously issued transaction medium;

data print means for printing the increased current remaining value in the next available portion of the visible data area of the previously issued transaction medium when the limited size of the visible data area has not been exceeded; and

the transaction information processing means storing the increased current remaining value in the memory area of the previously issued transaction medium.

16. A system according to claim 15, wherein the transaction medium issuing control means includes means responsive to the reissuing operation selection key for adding a prescribed premium to the increased current remaining value of the previously issued transaction medium.

17. A system according to claim 15, wherein the input means further includes an issuing operation selection key, the transaction information processing means including means responsive to the issuing operation selection key for storing the current remaining value in the memory area of the new transaction medium, the data print means including means for printing the current remaining value on the visible data area of the new transaction medium.

18. A system according to claim 15, wherein the input means includes an issuing operation selection key, the transaction medium issuing control means including memory means for storing data representing a medium issue fee, the transaction medium issuing control means also including means responsive to the issuing operation selection key for determining the initial value by subtracting the medium issue fee from the current remaining value of the previously issued transaction medium for issuing the new transaction medium.

19. A system according to claim 18, wherein the transaction information processing means includes means for storing the initial value in the memory area of the new transaction medium, and the data print means includes means for printing the initial value on the visible data area of the new transaction medium.

20. A system according to claim 19 further including means for invalidating the previously issued transaction medium.

21. A system according to claim 15, wherein the input means further includes a correcting operation selection key, and the transaction medium issuing control means includes means for correcting the current remaining value of the previously issued transaction medium based on the input monetary value.

22. A system according to claim 21, wherein the transaction information processing means includes means for storing the corrected current remaining value in the memory area of the previously issued transaction medium, and the data print means includes means for printing the corrected current remaining value in the next available portion on the visible data area of the previously issued transaction medium.

*Fig.1.*

Fig. 2.

Fig.3.

Fig.4.

*Fig.5a.*

*Fig.5b.*

PREAMBLE 117a

ISSUER CODE 117b

SPARE 117c

PASSWORD 117d

SPARE 117e

INITIAL VALUE 117f

NUMBER OF TIMES USED 117g

REMAINING VALUE 117h

PRODUCTION NUMBER 117i

POSTAMBLE 117j

*Fig.6a.*

73a

```
10
 8
```

→

74a

```
7
```

*Fig.6b.*

73a

```
10
 8
 2
 1
```

→

73a

```
10
 8
 2
 1
11
```

*Fig.6c.*

73a

```
10
 8
 2
 1
```

→

73a

```
10
 8
 2
 1
12
```

*Fig.6d.*

73a

```
:
25
18
```

→

73a

```
:
25
18
20
```

START

INSERT
CARD TYPE
MEDIUM —ST1

A

OPERATE
REISSUE
KEY —ST2

OPERATE
ADDITION
KEY —ST7

CALCULATE
NEW INITIAL
VALUE (N) —ST3

INSERT
BANKNOTES —ST8

RECORD &
PRINT (N)
ON NEW CARD —ST4

OPERATE
VALUE BUTTON —ST9

B

PUNCH
OLD CARD
TYPE MEDIUM —ST5

CALCULATE
NEW INITIAL
VALUE (N) —ST10

DISCHARGE
OLD CARD
TYPE MEDIUM —ST6

RECORD &
PRINT (N)
ON OLD CARD —ST11

*Fig.7a.*

Fig.7b.